# FASCICULE DE BREVET EUROPEEN

(11) **EP 0 514 243 B1**
(45) Date de publication et mention de la délivrance du brevet: **26.04.1995**
(21) Numéro de dépôt: 92401265.1
(22) Date de dépôt: 06.05.1992
(51) Int. Cl.: G21C 9/016

(54) **Dispositif de récupération et de refroidissement du coeur d'un réacteur nucléaire en fusion, à la suite d'un accident**
Vorrichtungen zum Auffangen und Kühlen eines geschmolzenen Kerns eines Kernreaktors nach einem Unfall
Device for recovering and cooling a fused nuclear reactor core after an accident

(30) Priorité: 17.05.1991 FR 9106047
(43) Date de publication de la demande: 19.11.1992
(73) Titulaire: FRAMATOME, 92400 Courbevoie (FR)
(72) Inventeur: Malaval, Claude, F-92160 Antony (FR)
(74) Mandataire: Bouget, Lucien

(56) Documents cités:
- EP-A- 0 392 604
- DE-A- 1 608 027
- GB-A- 2 000 357

## Description

L'invention concerne un dispositif de récupération et de refroidissement du coeur d'un réacteur nucléaire en fusion, à la suite d'un accident.

Les réacteurs nucléaires à eau sous pression comportent une cuve de forme générale cylindrique renfermant le coeur du réacteur, disposée avec son axe vertical dans un puits de cuve cylindrique ayant un fond inférieur situé à l'aplomb de la cuve. Le coeur du réacteur nucléaire est refroidi par de l'eau sous pression circulant dans le circuit primaire du réacteur et à l'intérieur de la cuve en contact avec les assemblages combustibles.

Dans le cas de certains accidents survenant dans le réacteur nucléaire et se traduisant par une perte de la fonction de refroidissement du coeur, on doit envisager, compte tenu des conséquences très graves qui en résulteraient, bien que la probabilité d'un tel évènement soit extrêmement faible et pratiquement nulle, le cas où les circuits d'injection de secours du réacteur ne pourraient être mis en fonctionnement. Il peut alors se produire une séquence accidentelle conduisant à la fusion du coeur en l'absence d'eau de refroidissement, ce qui peut entraîner une destruction par percée du fond de la cuve et l'écoulement de la masse du coeur en fusion et des matériaux entourant le coeur, dans le puits en béton contenant la cuve du réacteur. Le contact de la masse en fusion du combustible et des matériaux entourant le combustible, appelée corium, dont la température peut atteindre 2800 à 3000°C, avec le fond du puits de cuve en béton, en l'absence de refroidissement, peut entraîner la destruction complète du fond du puits. Le corium peut alors s'enfoncer dans le radier de l'enceinte de confinement du réacteur, détruire ce radier et contaminer les nappes phréatiques présentes dans le sol du site du réacteur nucléaire. La progression du corium à l'intérieur du sol ne peut s'arrêter que lorsque la puissance résiduelle du corium a décru suffisamment.

On a proposé différents dispositifs pour éviter le contact du corium avec le fond du puits de cuve en béton.

Les dispositifs connus permettent généralement d'étaler la masse du corium sur une certaine surface, pour que la puissance à évacuer par unité de surface soit la plus faible possible et soit compatible avec les possibilités de refroidissement par des fluides. On a par exemple proposé de récupérer et de contenir le corium dans une poche métallique revêtue intérieurement de matériaux réfractaires dont la fusion partielle absorbe de l'énergie, de manière transitoire, et permet de disposer d'un intervalle de temps suffisant pour noyer extérieurement la poche métallique dans une masse d'eau, afin d'évacuer la puissance résiduelle du corium par ébullition de la masse d'eau.

L'inconvénient de ce dispositif provient du fait que les matériaux réfractaires sont le plus souvent de très mauvais conducteurs de la chaleur, ce qui a pour effet d'augmenter la température d'équilibre du corium qui reste à l'état liquide.

On connaît d'autres dispositifs qui utilisent des soles réfractaires refroidies en permanence par un circuit d'eau. Un des inconvénients de ces dispositifs est que le circuit de refroidissement peut présenter des défaillances qui sont susceptibles de le rendre au moins partiellement inefficace. D'autre part, les échanges thermiques ne sont pas suffisamment intenses pour éviter que le corium reste à une température élevée et à l'état liquide après son déversement sur le dispositif de récupération et de refroidissement.

Du document EP-A-0 392 604 est connu un dispositif constitué par un empilement de profilés placés horizontalement dans le fond du puits, en-dessous du fond de la cuve, de manière à constituer des réceptacles pour le corium fondu, afin de réaliser la dispersion de la masse fondue, d'améliorer son refroidissement et de permettre sa solidification. Ce dispositif a cependant l'inconvénient de ne pas assurer une protection efficace du béton du puits de cuve, lorsque l'écoulement du corium se produit de façon localisée. Les profilés qui sont disposés en quinconce sont alors susceptibles de se remplir successivement de corium fondu par débordement local, de telle sorte que la masse fondue peut atteindre rapidement le fond du puits de cuve.

Le but de l'invention est donc de proposer un dispositif de récupération et de refroidissement du coeur d'un réacteur nucléaire en fusion, à la suite d'un accident, le réacteur comportant une cuve de forme cylindrique renfermant le coeur du réacteur, disposée avec son axe vertical dans un puits de cuve cylindrique ayant un fond inférieur situé à l'aplomb de la cuve et le dispositif de récupération étant constitué par une structure métallique reposant sur le fond du puits de cuve et immergée dans une masse d'eau remplissant la partie inférieure du puits de cuve, ce dispositif permettant d'éviter tout contact entre la masse du coeur fondu et le béton du puits de cuve et d'assurer un refroidissement et une solidification rapides de la masse fondue.

Dans ce but, la structure métallique comporte :
- une cheminée centrale comportant un corps cylindrique disposé coaxialement par rapport au puits de cuve et une paroi supérieure déflectrice inclinée par rapport au plan horizontal et disposée au-dessus du corps cylindrique,
- une paroi de récupération et de refroidissement du coeur disposée autour du corps de la cheminée et constituée par un ensemble d'éléments jointifs en forme de dièdres constitués de tôles métalliques et ayant une arête rectiligne, fixés dans une disposition rayonnante autour du corps de la cheminée, par des parties d'extrémité internes, au niveau d'ouvertures triangulaires traversant la paroi du corps de la cheminée, les arêtes des dièdres constituant leur partie supérieure étant inclinées vers le haut en direction de la cheminée et l'espace situé entre la paroi de récupération et le fond du puits communiquant avec la cheminée par les ouvertures triangulaires,
- une paroi périphérique disposée au voisinage de la surface intérieure du puits de cuve et formée de dièdres verticaux, de manière à ménager au moins un passage mettant en communication l'espace situé entre la paroi de récupération et le fond de cuve avec le volume intérieur du puits de cuve, au-dessus de la paroi de récupération.

Afin de bien faire comprendre l'invention, on va maintenant décrire, à titre d'exemple non limitatif, en se référant aux figures jointes en annexe, un dispositif de récupération et de refroidissement de la masse fondue du coeur d'un réacteur nucléaire à eau sous pression et une variante de réalisation de ce dispositif.

La figure 1 est une vue schématique en élévation et en coupe de la partie inférieure d'un puits de cuve d'un réacteur nucléaire à eau sous pression équipé d'un dispositif de récupération et de refroidissement suivant l'invention.

La figure 2 est une vue en perspective d'un dispositif de récupération et de refroidissement suivant l'invention et suivant un premier mode de réalisation.

La figure 3 est une vue en coupe verticale du dispositif représenté sur la figure 2.

Les figures 4A, 4B et 4C sont des vues en coupe suivant A, B et C respectivement du dispositif de récupération et de refroidissement représenté sur la figure 3.

La figure 5 est une vue en perspective d'un dispositif de récupération et de refroidissement suivant l'invention et suivant un second mode de réalisation.

La figure 5A est une vue de détail en perspective de la cheminée du dispositif représenté sur la figure 5.

La figure 6 est une vue en coupe verticale du dispositif représenté sur la figure 5.

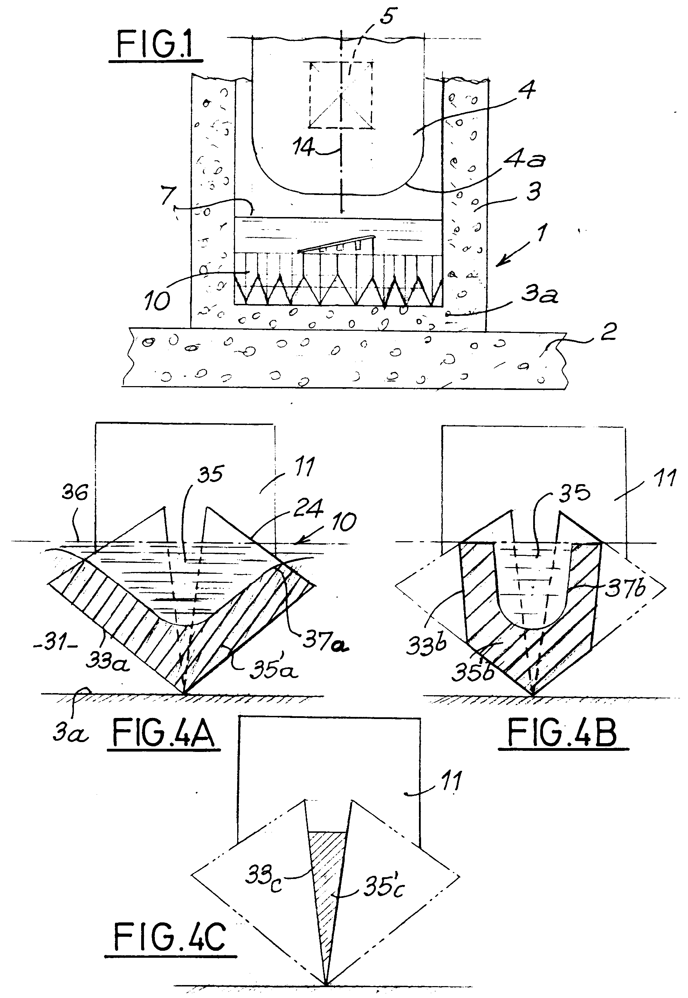

Sur la figure 1, on voit une partie de la structure en béton 1 d'un réacteur nucléaire comportant le radier 2 de l'enceinte de confinement du réacteur constitué par une dalle de forte épaisseur et le puits de cuve reposant sur le radier 2 par l'intermédiaire de son fond inférieur 3a.

La cuve 4 du réacteur nucléaire renfermant le coeur 5, de forme générale cylindrique est fermée à sa partie inférieure par un fond bombé 4a et disposée à l'intérieur du puits de cuve 3 avec son axe vertical confondu avec l'axe du puits de cuve.

La partie inférieure du puits de cuve 3, au-dessus du fond 3a, est remplie d'eau jusqu'à un niveau 7.

Un dispositif de récupération et de refroidissement 10 suivant l'invention constitué par une structure métallique repose sur le fond de puits 3a, en-dessous du fond de cuve 4a, de manière à assurer la récupération et le refroidissement du corium constitué par la masse fondue du coeur 5, dans le cas d'un accident se traduisant par une perte totale de refroidissement du réacteur nucléaire.

La structure métallique constituant le dispositif 10 est entièrement immergée dans la masse d'eau remplissant la partie inférieure du puits de cuve 3, jusqu'au niveau 7.

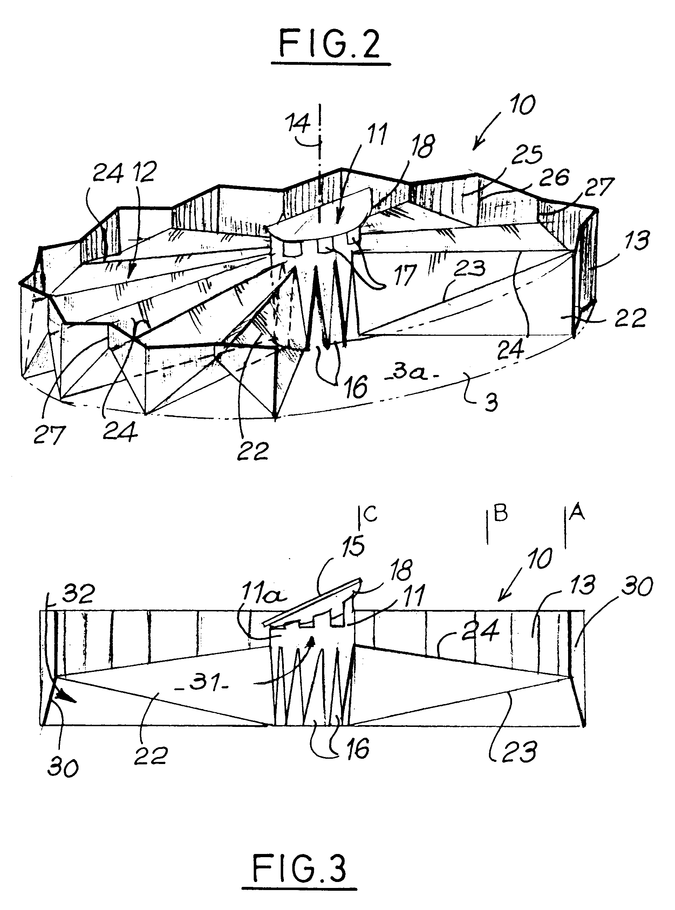

Sur la figure 2, on a représenté le dispositif de récupération et de refroidissement 10 reposant sur le fond de puits 3a dans la partie inférieure du puits de cuve 3 dont la surface interne a été représentée de manière schématique en traits interrompus.

Comme il est visible sur les figures 2 et 3, le dispositif 10 est constitué par une structure métallique comportant une cheminée centrale 11, une paroi de récupération et de refroidissement 12 entourant la cheminée 11 et une paroi périphérique 13 dont la section transversale perpendiculaire à l'axe 14 de la cheminée 11 confondu avec l'axe du puits de cuve 3 présente une forme polygonale.

La cheminée 11 comporte un corps tubulaire cylindrique 11a et une paroi supérieure déflectrice 15 fixée au-dessus de l'extrémité supérieure du corps tubulaire 11a et inclinée par rapport au plan horizontal.

La paroi du corps tubulaire 11a et la paroi déflectrice 15 sont entièrement métalliques et généralement constituées par de l'acier.

La paroi du corps tubulaire 11a est traversée par des ouvertures triangulaires 16 s'étendant sur une partie substantielle de la hauteur du corps tubulaire. Les ouvertures triangulaires 16 ont leur base située au niveau de la partie inférieure et leur sommet au voisinage de la partie supérieure du corps tubulaire 11a.

Dans le cas du mode de réalisation représenté sur les figures 2 et 3, on a réalisé treize ouvertures successives 16 suivant la périphérie du corps cylindrique de la cheminée 11.

La partie supérieure du corps tubulaire 11a est également découpée pour constituer des créneaux 17 situés au-dessus des ouvertures triangulaires 16 et débouchant à l'extrémité supérieure du corps tubulaire 11a.

La paroi déflectrice 15 est fixée sur les extrémités des créneaux 17. La partie supérieure du corps tubulaire 11a de la cheminée présente une découpe des extrémités des créneaux 17 telle que la paroi déflectrice 15 soit fixée dans une position inclinée par rapport au plan horizontal.

La paroi de récupération et de refroidissement 12 est constituée par des éléments 22 en forme de dièdres fixés les uns aux autres de manière jointive suivant leurs bords latéraux.

Certains des dièdres 22 de la paroi 12 n'ont pas été représentés, de manière à mieux montrer la structure du dispositif. Cependant, il doit être compris que la paroi 12 est continue tout autour de la cheminée 11.

Chacun des dièdres 22 de la paroi 12 est constitué à partir de tôles métalliques rectangulaires pliées et assemblées entre elles par soudage par exemple le long de l'arête rectiligne 24.

Chacun des dièdres 22 est fixé à l'une de ses extrémités appelée extrémité interne, sur le corps 11a de la cheminée 11, suivant les bords inclinés d'une ouverture triangulaire 16. Les bords latéraux des éléments 22 en forme de dièdres qui sont assemblés les uns aux autres sont placés dans une disposition horizontale et reposent sur le fond 3a du puits de cuve.

Les faces inclinées des éléments 22 en forme de toit présentent une forme rectangulaire et sont pliées vers l'extérieur suivant une diagonale 23, de sorte que les dièdres présentent deux angles d'ouverture différents, un premier angle d'ouverture faible au niveau des ouverturs 16 de la cheminée et un second angle d'ouverture, supérieur au premier, dans la partie de dièdre dirigée vers l'extérieur, c'est-à-dire vers la paroi du puits de cuve. Ainsi, les éléments 22 en forme de dièdres ne comportent que des faces planes. De plus, l'arête 24 du dièdre constituant la partie supérieure de chacun des éléments 22 est inclinée vers le haut en direction de la cheminée 11, c'est-à-dire de l'extérieur vers l'intérieur du dispositif de récupération 10.

Les éléments 22 en forme de dièdres ont une disposition rayonnante autour de la cheminée 11.

La paroi périphérique 13 est constituée par une succession de dièdres 25 présentant des faces de forme trapézoïdale et des arêtes de raccordement ou de pliage 26, 27 disposés dans une direction sensiblement verticale. Les dièdres 25 sont fixés suivant les deux bords inclinés de l'extrémité externe à grand angle d'ouverture de chacun des éléments horizontaux 22 en forme de dièdres à section triangulaire.

La paroi 13 présente la forme d'une couronne fixée suivant toute la périphérie de la paroi de récupération 12, le long des bords inclinés externes de cette paroi 12 constituée de dièdres jointifs.

La paroi périphérique 13 est disposée au-dessus de la paroi de récupération 12, de sorte que cette paroi périphérique constitue le bord externe relevé d'un réceptacle de récupération de la masse fondue du coeur du réacteur nucléaire dont la paroi 12 constitue le fond.

La structure métallique constituant le dispositif de récupération 10 peut être réalisée par mécanosoudage, à partir de tôles métalliques dont la composition et l'épaisseur sont déterminées par les conditions d'utilisation du dispositif.

Le dispositif dans son ensemble est placé à l'intérieur du puits de cuve d'un réacteur nucléaire à eau sous pression et repose sur le fond de puits 3a, par l'intermédiaire de la partie inférieure de la paroi de récupération 12 constituée par les bords latéraux des éléments 22 en forme de dièdres et par la base du corps 11a de la cheminée 11.

La dimension de la structure constituant le dispositif 10 est telle que cette structure peut être exactement centrée à l'intérieur du puits de cuve, les arêtes 26 de la paroi périphérique 13 venant en contact avec la surface intérieure du puits de cuve et l'axe de la cheminée 14 étant confondu avec l'axe du puits de cuve.

Pendant le fonctionnement du réacteur, la structure 10 est entièrement immergée dans une masse d'eau remplissant le fond du puits de cuve.

Lors d'un accident sur le réacteur nucléaire se traduisant par une perte totale de la fonction de refroidissement du coeur et donc par un échauffement de la masse du coeur qui ne peut plus être maîtrisé, les dispositifs d'injection de secours étant devenus indisponibles, la masse du coeur est susceptible d'atteindre une température à laquelle elle constitue une masse fondue qui s'écoule dans le fond de la cuve dont elle réalise la percée. La masse du coeur en fusion ou corium s'écoule alors dans le fond du puits de cuve où elle vient en contact avec la masse d'eau remplissant la partie inférieure du puits de cuve et avec le dispositif de récupération et de refroidissement suivant l'invention.

Dans le cas d'une percée sensiblement centrée par rapport au fond de cuve, ce qui est le cas le plus fréquent, la masse du corium entre en contact avec le dispositif 10, au niveau de la surface déflectrice 15 qui dirige l'écoulement de la masse en fusion vers la paroi de récupération et de refroidissement 12.

La surface supérieure de cette paroi qui est constituée par des dièdres successifs dont les faces présentent de fortes pentes permet de réaliser un étalement très rapide du corium, dans les directions circonférentielles et en direction de la périphérie du dispositif de récupération et de refroidissement.

Le corium est donc étalé très rapidement sous la forme d'une couche relativement mince qui est refroidie sur sa face supérieure par l'eau remplissant le puits de cuve et sur sa face inférieure par la paroi de refroidissement 12 qui délimite avec le fond du puits de cuve 3a un espace rempli d'eau assurant le refroidissement de la paroi 12, la chaleur étant prélevée par l'échauffement et surtout la vaporisation de cette eau. De plus, il se produit une circulation intense d'eau et de vapeur au contact de la paroi 12, du fait que l'eau contenue dans l'espace situé entre la paroi 12 et le fond de puits 3a, à l'intérieur des canaux à section triangulaire délimités par les dièdres 22 est en contact thermique avec le corium, par l'intermédiaire de la paroi 12 et se vaporise à l'intérieur des canaux. La vapeur formée est entraînée très rapidement vers la cheminée 11, en particulier du fait de l'inclinaison de l'arête supérieure 24 des dièdres 22. La vapeur pénétrant dans le corps tubulaire 11a de la cheminée 11 est évacuée par les ouvertures 17.

La paroi périphérique 13 qui est fixée sur les bords inclinés de la paroi de récupération 12 délimite des passages d'eau 30 entre sa surface externe et la surface intérieure du puits de cuve 3. Les passages d'eau 30 mettent en communication la partie du puits de cuve située au-dessus de la paroi de récupération 12 avec les passages d'eau à section triangulaire 31 compris entre les dièdres de la paroi 12 et le fond de puits 3a.

De cette manière, l'eau remplissant le fond du puits de cuve 3 est susceptible de circuler, comme indiqué par la flèche 32 sur la figure 3, entre l'espace intérieur du puits de cuve 3 situé au-dessus du dispositif 10 et les canaux 31 dans lesquels se produit la vaporisation de l'eau en contact thermique avec le corium récupéré par la surface 12 et étalé sur les surfaces inclinées de cette surface 12. L'eau transformée en vapeur à l'intérieur des canaux 31 et évacuée par la cheminée 11 est donc remplacée par de l'eau provenant de l'espace du puits de cuve situé au-dessus du dispositif 10. Il se produit donc une circulation intense d'eau au contact de la surface intérieure des canaux 31.

Le corium est donc refroidi à la fois par le dessus, par la masse d'eau remplissant le puits de cuve 3 et par le dessous, par l'eau circulant à l'intérieur des canaux 31 dont le corium produit l'échauffement et la vaporisation.

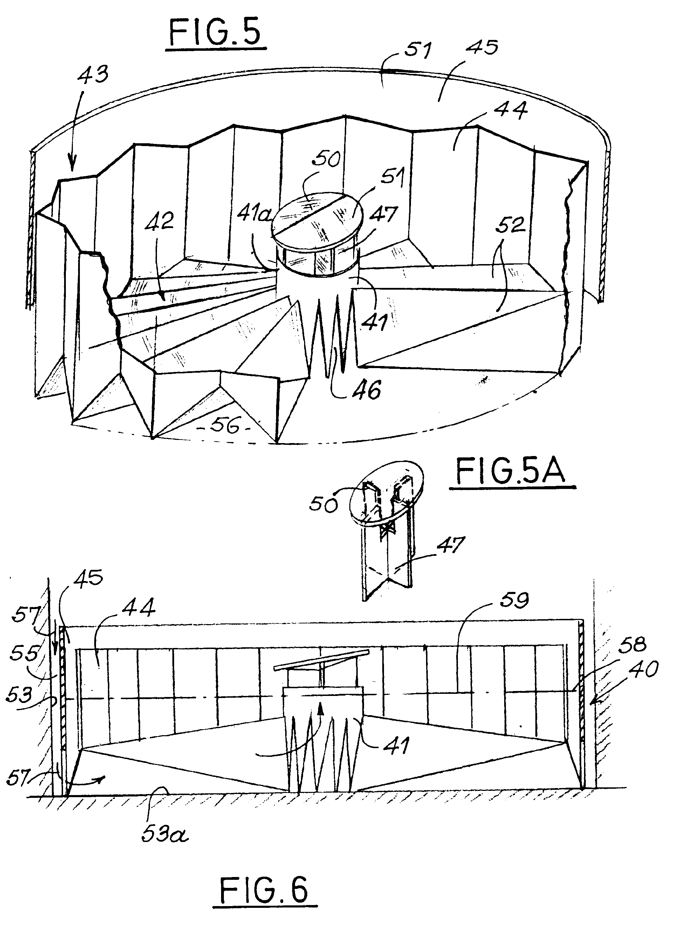

Sur les figures 4A, 4B et 4C, on a représenté une partie du dispositif de récupération et de refroidissement 10 comportant la cheminée 11 d'évacuation de vapeur et la paroi de récupération 12 constituée par des dièdres juxtaposés et délimitant les canaux à section triangulaire 31.

Trois sections de la paroi 12, 33a, 33b et 33c correspondant aux plans de coupe A, B et C représentés sur la figure 3, respectivement, ont également été représentées sur les figures 4A, 4B et 4C.

Le plan de coupe 33a correspond au bord extérieur de la paroi 12 comportant les parties d'entrée des canaux 31.

La section 33c correspond au bord intérieur de la paroi de séparation 12 raccordée à la cheminée 11, le long des bords des ouvertures 16.

La section 33b correspond à une section intermédiaire suivant laquelle les faces des dièdres présentent deux pentes successives différentes.

On a également représenté sur les figures 4A, 4B et 4C une masse de corium 35 qui est déversée sur la paroi de récupération 12 en cas d'accident et qui est étalée au contact de la surface supérieure de la surface 12.

On a représenté, dans les différentes sections 33a, 33b et 33c, la forme de la couche de corium qui se solidifie très rapidement après son déversement, au contact de la surface supérieure de la paroi 12.

Dans la section 33a, la masse de corium solidifié 35′a est délimitée à sa partie supérieure par une surface courbe 37a sensiblement parallèle à la surface en dents de scie de la surface 12. Il se produit en effet dans la section 33a un refroidissement intense et sensiblement uniforme de la masse de corium, de sorte qu'une couche épaisse 35′a de corium solidifié se forme très rapidement sur la surface supérieure de la paroi 12.

On a également représenté le niveau supérieur 37b de la masse de corium solidifié dans la section intermédiaire 33b. Cette surface 37b comporte deux bords sensiblement parallèles à la partie à forte pente de la section 33b et une partie médiane courbe. En effet, le corium se répandant sur la paroi 12 est refroidi de manière intense et constitue très rapidement une couche épaisse, dans la partie supérieure des dents de la paroi 12. Le corium parvenant en fond de denture, entre deux parties successives de la paroi 12 disposées angulairement, est fortement refroidi entre les deux surfaces, dans l'angle dièdre qu'elles délimitent, pour constituer une masse de corium solidifié 35′b remplissant en particulier tout le volume intérieur de l'angle dièdre.

Enfin, dans la section 33c, le corium est refroidi à la fois par les surfaces supérieures de la paroi 12 et par la paroi de la cheminée 11. Le corium constitue très rapidement une masse solidifiée 35′c remplissant tout l'espace compris entre deux dentures successives de la paroi 12.

Le corium répandu sur la paroi de récupération 12 est donc susceptible de constituer très rapidement une couche solidifiée épaisse sur la surface supérieure de cette paroi.

On évite ainsi une progression du corium liquide en direction du fond de cuve 3a ; la paroi de récupération est d'autre part consolidée et rigidifiée par la couche de corium solide.

Même si la paroi 12 qui est constituée par une simple tôle métallique se trouve percée à certains endroits, par fusion du métal sous l'effet de la chaleur du corium, la paroi se reconstitue immédiatement par solidification du corium qui constitue une couche de protection de forte épaisseur.

En outre, le refroidissement par le dessous de la couche de corium solidifiée reste intense, dans la mesure où les tôles métalliques et la masse du corium solidifié sont des matériaux à haute conductivité thermique.

Il est bien évident que le dispositif de récupération et de refroidissement 10 est destiné à servir une seule fois pour la récupération du coeur du réacteur, en cas d'accident.

Sur les figures 5, 5A et 6, on a représenté une variante de réalisation du dispositif suivant l'invention.

Le dispositif représenté sur les figures 5 et 6 et désigné de manière générale par le repère 40 comporte une cheminée centrale 41, une paroi de récupération 42 constituée par des dièdres juxtaposés et une paroi périphérique extérieure 43 fixée sur les extrémités extérieures des dièdres constituant la paroi 44.

La cheminée 41 comporte un corps cylindrique 41a percé d'ouvertures triangulaires allongées 46 suivant les bords desquels viennent se raccorder et se fixer les extrémités intérieures des dièdres 52 constituant la paroi de récupération 42.

Comme il est visible sur les figures 5 et 5A, un élément 47 constitué par des tôles planes assemblées à angles droits de manière à présenter une section transversale en forme de croisillon est disposé et fixé à l'intérieur du corps cylindrique 41a de la cheminée 41, dans sa direction axiale et constitue le support d'une paroi plane 50 fixée en position inclinée sur ledit croisillon.

Par rapport au mode de réalisation représenté sur les figures 1 et 2, la cheminée 41 ne comporte pas d'ouverture dans sa partie supérieure, la vapeur d'eau récupérée par la cheminée s'échappant librement par l'espace existant entre le croisillon 47 supportant la paroi 50 et la partie supérieure du corps cylindrique 41a de la cheminée, du fait que la partie centrale 47 de la cheminée présente une longueur supérieure à la longueur du corps 41a.

En outre, la paroi périphérique externe 43 du dispositif 40 est constituée non plus sous la forme d'une simple paroi à section polygonale, comme dans le cas du dispositif représenté sur les figures 2 et 3, mais par une double paroi comportant un premier élément de paroi interne 44 sensiblement identique à la paroi 13 à section polygonale du dispositif 10 représenté sur les figures 2 et 3 et un second élément de paroi 45 constitué par une virole cylindrique fixée de manière coaxiale à la périphérie du dispositif 40, suivant les arêtes verticales de la paroi 44.

Comme il est visible en particulier sur la figure 6, la virole 45 présente un diamètre inférieur au diamètre intérieur du puits de cuve 53, de sorte qu'il subsiste un espace annulaire 55 permettant la circulation d'eau de refroidissement dans le sens des flèches 57, en direction des canaux 56 à section triangulaire délimités par la surface inférieure de la paroi de récupération 42 et par la surface 53a du fond du puits de cuve 53.

Il se produit donc, comme précédemment, une circulation intense d'eau entre l'espace du puits de cuve situé au-dessus du dispositif 40 et la cheminée 41 par l'intermédiaire de l'espace 55 et des canaux 56. L'eau se vaporise à l'intérieur des canaux 56 au contact de la paroi 44, les bulles de vapeur étant évacuées d'une part par la cheminée 41 et d'autre part dans les espaces 58 situés entre les dièdres de la paroi 44 et la surface intérieure de la virole 45.

Dans ce mode de réalisation, la circulation d'eau dans l'espace 55 est totalement séparée par la virole 45 de la circulation des bulles de vapeur dans les espaces 58.

Le fonctionnement du dispositif 40 en cas de déversement du corium jusqu'au niveau 59 à l'intérieur de la paroi périphérique 44 est semblable au fonctionnement du dispositif 10 qui a été décrit précédemment, mis à part le fait qu'il se produit une vaporisation d'eau et un entraînement de vapeur, à l'extérieur de la paroi périphérique 44 et à l'intérieur de la virole 45.

Dans le cas du dispositif 40, on obtient une récupération et un étalement efficace du corium sur la paroi de récupération 42, à l'intérieur de la paroi périphérique 44, et une solidification du corium au contact de la paroi 42, de sorte qu'on évite tout contact entre le corium liquide et la paroi du puits de cuve 53.

Dans le cas d'un puits de cuve ayant une section transversale d'une surface de 33 m², on a pu réaliser un dispositif de récupération et de refroidissement dont la surface de récupération constituée de dièdres juxtaposés a une surface totale supérieure à 80 m².

Ce dispositif permet de récupérer un volume de corium de l'ordre de 20 m³ sous la forme d'une couche ayant une hauteur voisine d'un mètre au-dessus du fond du puits de cuve.

En utilisant une paroi périphérique et une cheminée d'une hauteur suffisante, on peut envisager la récupération d'un corium ayant un volume bien supérieur et par exemple de l'ordre de 40 m³.

Le dispositif suivant l'invention permet donc de récupérer et de refroidir le corium s'échappant de la cuve d'un réacteur nucléaire, en cas d'accident, de manière à éviter tout contact entre du corium liquide et le fond du puits de cuve.

L'invention ne se limite pas au mode de réalisation qui a été décrit.

C'est ainsi qu'on peut imaginer d'utiliser une cheminée centrale et une paroi périphérique d'une forme différente de celles qui ont été décrites. La paroi périphérique doit toutefois se raccorder au bord externe de la paroi de récupération constituée par des dièdres juxtaposés et constituant des canaux rayonnants à section triangulaire.

Le dispositif suivant l'invention peut être utilisé pour récupérer et refroidir le corium de tout réacteur nucléaire comportant une cuve disposée à l'intérieur d'un puits de cuve en béton, dans le cas d'une situation accidentelle se traduisant par une indisponibilité totale des systèmes de refroidissement principaux et auxiliaires du réacteur nucléaire.

## Revendications

1. Dispositif de récupération et de refroidissement du coeur (5) d'un réacteur nucléaire en fusion, à la suite d'un accident, le réacteur comportant une cuve (4) de forme cylindrique renfermant le coeur (5) du réacteur disposée avec son axe vertical dans un puits de cuve cylindrique (3) ayant un fond inférieur (3a) situé à l'aplomb de la cuve (4) et le dispositif de récupération étant constitué par une structure métallique (10) reposant sur le fond du puits de cuve (3a) et immergé dans une masse d'eau remplissant la partie inférieure du puits de cuve (3), caractérisé par le fait que la structure métallique (10) comporte :
- une cheminée centrale (11) comportant un corps cylindrique (11a) disposé coaxialement par rapport au puits de cuve (3) et une paroi supérieure déflectrice (15) inclinée par rapport au plan horizontal, disposée au-dessus du corps cylindrique (11a),
- une paroi (12, 42) de récupération et de refroidissement du coeur disposée autour du corps de la cheminée (11) et constituée par un premier ensemble d'éléments jointifs (22, 52) en forme de dièdres constitués de tôles métalliques et ayant une arête rectiligne (24), fixés dans une disposition rayonnante autour du corps de la cheminée (11) par des parties d'extrémité internes, au niveau d'ouvertures triangulaires (16, 46) traversant la paroi du corps de la cheminée (11), les arêtes (24) des dièdres constituant leur partie supérieure étant inclinées vers le haut en direction de la cheminée (11) et l'espace situé entre la paroi de récupération (12, 42) et le fond du puits (3) communiquant avec la cheminée (11) par les ouvertures triangulaires (16, 46),
- et une paroi périphérique (13, 43) fixée sur les extrémités extérieures des dièdres (22) du premier ensemble opposées aux extrémités fixées sur la cheminée (11) et disposée au voisinage de la surface intérieure du puits de cuve (3), de manière à ménager au moins un passage (30, 55) mettant en communication l'espace situé entre la paroi de récupération (12) et le fond (3a) du puits de cuve (3) avec le volume intérieur du puits de cuve (3), au-dessus de la paroi de récupération (12).

2. Dispositif suivant la revendication 1, caractérisé par le fait que la paroi périphérique (13, 43) comporte un élément de paroi (13, 44) à section polygonale constitué par un second ensemble d'éléments en forme de dièdres fixés sur les extrémités extérieures des dièdres (22) du premier ensemble et comportant des arêtes rectilignes (26, 27) disposées verticalement à la périphérie du puits de cuve (3).

3. Dispositif suivant la revendication 2, caractérisé par le fait que la paroi périphérique comporte de plus une virole cylindrique (45) fixée dans une disposition coaxiale sur la paroi périphérique (44) à section polygonale, suivant ses arêtes verticales extérieures, la virole (45) ayant un diamètre inférieur au diamètre du puits de cuve, de manière à ménager à la périphérie du dispositif de récupération et de refroidissement (40) un espace annulaire (55) mettant en communication l'espace situé entre la paroi de récupération (42) et le fond de cuve (53a) avec le volume intérieur du puits de cuve (53), au-dessus de la paroi de récupération (42).

4. Dispositif suivant l'une quelconque des revendications 1 à 3, caractérisé par le fait que le corps cylindrique (11a) de la cheminée centrale (11) comporte des ouvertures de passage de vapeur (17) dans sa partie supérieure.

5. Dispositif suivant l'une quelconque des revendications 1 à 3, caractérisé par le fait que la cheminée (41) comporte de plus un élément central (47) en forme de croisillon sur lequel est fixée la paroi supérieure déflectrice (50), ayant une hauteur dans la direction axiale supérieure à la hauteur du corps cylindrique de la cheminée (41).

6. Dispositif suivant l'une quelconque des revendications 1 à 5, caractérisé par le fait que les dièdres (22) du premier ensemble comportent des faces inclinées rectangulaires pliées suivant une diagonale (23), de manière que les dièdres (22) présentent deux angles d'ouvertures différents dans la direction radiale.

## Patentansprüche

1. Vorrichtung zum Auffangen und Kühlen des infolge eines Unfalls schmelzenden Kerns (5) eines Kernreaktors, wobei der Reaktor einen zylinderförmigen Behälter (4) aufweist, der den Reaktorkern (5) des Reaktors umschließt und dessen Achse vertikal in einem zylinderförmigen Behälterschacht (3) verläuft, der einen unteren Boden (3a) aufweist, der senkrecht unter dem Behälter (4) liegt und eine Auffangvorrichtung aufweist, bestehend aus einem Metallaufbau (10) der auf dem Boden des Behälterschachts (3a) ruht und in einer Kühlwassermasse eingetaucht ist, die den unteren Teil des Behälterschachts (3) ausfüllt,
dadurch gekennzeichnet, daß
der Metallaufbau (10) aufweist:
- einen zentralen Kamin (11) mit einem zylinderförmigen Körper (11a), der koaxial zum Behälterschacht (3) angeordnet ist und eine obere Ableitfläche (15) aufweist, die gegenüber der Horizontalen geneigt ist und oberhalb des Zylinderkörpers (11a) angeordnet ist,
- eine Wand (12, 42) zum Auffangen und Abkühlen des Reaktorkerns, die um den Körper des Kamins (11) angeordnet ist und aus einer ersten Gruppe von diederförmigen miteinander verbundenen Elementen (22, 52), die aus Metallblechen bestehen und eine gradlinige Kante (24) aufweisen und die in einer radialen Anordnung um den Körper des Kamins (11) angeordnet sind, wobei die Befestigung auf der Höhe von dreieckigen Öffnungen (16, 46) erfolgt, die die Wandung des Körpers des Kamins (11) durchqueren, wobei die Kanten (24) der Dieder, die deren oberen Teil bilden nach oben in Richtung des Kamins (11) geneigt sind und der Raum, der zwischen der Auffangwandung (12, 42) und den Boden des Schachtes (3) mit dem Kamin (11) über die dreieckigen Öffnungen (16, 46) in Verbindung stehen,
- und eine Umfangswandung (13, 43), die auf den äußeren Enden der Dieder (22) der ersten Gruppe an den den Enden entgegengesetzten Enden, die am Kamin (11) befestigt sind befestigt ist und in der Nähe der inneren Oberfläche des Behälterschachts (3) angeordnet ist, derart, daß mindestens ein Durchlaß (30, 55) freigehalten wird, der den Raum zwischen der Auffangwandung (12) und dem Boden (3a) des Behälterschachts (3) mit dem inneren Volumen des Behälterschachts (3) oberhalb der Auffangwandung (12) verbindet.

2. Vorrichtung nach Anspruch 1, dadurch gekennzeichnet, daß die Umfangswandung (13, 43) ein Wandelement (13, 43) mit polygonalem Querschnitt aufweist, das aus einer zweiten Gruppe diederförmiger Elemente besteht, die auf den äußeren Enden der Dieder (22) der ersten Gruppe befestigt sind und gradlinige Kanten (26, 27) aufweisen, die vertikal auf dem Rand des Behälterschachts (3) verlaufen.

3. Vorrichtung nach Anspruch 2, dadurch gekennzeichnet, daß die äußere Wandung außerdem einen Zylinderring (45) aufweist, der koaxial zur Randwandung (44) mit polygonalem Querschnitt entlang der senkrechten äußeren Kanten befestigt ist, wobei der Ring (45) einen Durchmesser aufweist, der kleiner ist als der Durchmesser des Behälterschachts, derart, daß am Rand der Auffang- und Kühlvorrichtung (40) ein Ringraum (55) eingelassen wird, der den Raum zwischen der Auffangwand (42) und dem Boden des Behälters (53a) mit dem Innenvolumen des Behälterschachts (53) oberhalb der Auffangwandung (42) miteinander verbindet.

4. Vorrichtung nach einem der Ansprüche 1 bis 3, dadurch gekennzeichnet, daß der Zylinderkörper (11a) des mittleren Kamins (11) Dampfdurchgangsöffnungen (17) in seinem oberen Bereich aufweist.

5. Vorrichtung nach einem der Ansprüche 1 bis 3, dadurch gekennzeichnet, daß der Kamin (41) außerdem ein zentrales Element (47) in Form eines Sterns aufweist, auf dem die obere Ablenkfläche (50) befestigt ist, welche eine Höhe in Axialrichtung hat, die größer ist als die Höhe des Zylinderkörpers des Kamins (41).

6. Vorrichtung nach einem der Ansprüche 1 bis 5, dadurch gekennzeichnet, daß die Dieder (22) der ersten Gruppe Flächen aufweist, die rechtwinklig geneigte Flächen aufweist, die entlang einer Diagonalen (23) derart gefaltet sind, daß die Dieder (22) zwei verschiedene Öffnungswinkel in Radialrichtung aufweisen.

## Claims

1. Device for recovering and cooling the core (5) of a fused nuclear reactor, after an accident, the reactor comprising a cylindrical container (4) containing the core (5) of the reactor, said container being arranged with its vertical axis in a cylindrical container shaft (3) having a bottom end (3a) located perpendicularly below the container (4), and the recovery device consisting of a metal structure (10) resting on the bottom of the container shaft (3a) and immersed in a mass of water filling the lower part of the container shaft (3), characterised in that the metal structure (10) comprises :
a central chimney (11) comprising a cylindrical body (11a) arranged coaxially with respect to the container shaft (3) and an upper deflecting wall (15) inclined relative to the horizontal plane and located above the cylindrical body (11a),
a wall (12, 42) for recovering and cooling the core, said wall being arranged round the body of the chimney (11) and consisting of a first set of contiguous elements (22, 52) in the form of dihedra consisting of metal sheets and having a rectilinear edge (24), fixed in an arrangement radiating out from the body of the chimney (11) y means of inner end portions, at triangular openings (16, 46) passing through the wall of the body of the chimney (11), the edges (24) of the dihedra which constitute their upper part being inclined upwards towards the chimney (11) and the space between the recovery wall (12, 42) and the bottom of the shaft (3) communicating with the chimney (11) via the triangular openings (16, 46),
and a peripheral wall (13, 43) fixed to the outer ends of the dihedra (22) of the first set opposite the ends fixed to the chimney (11) and located in the vicinity of the inner surface of the container shaft (3), so as to define at least one passage (30, 55) enabling the space situated between the recovery wall (12) and the bottom (3a) of the container shaft (3) to communicate with the inner space of the container shaft (3), above the recovery wall (12).

2. Device according to claim 1, characterised in that the peripheral wall (13, 43) has a wall element (13, 44) of polygonal section consisting of a second set of elements in the form of dihedra fixed to the outer ends of the dihedra (22) of the first set and comprising rectilinear edges (26, 27) arranged vertically on the periphery of the container shaft (3).

3. Device according to claim 2, characterised in that the peripheral wall further comprises a cylindrical bushing (45) fixed in a coaxial arrangement to the peripheral wall (44) of polygonal section, along its vertical outer edges, the bushing (45) having a diameter which is less than the diameter of the container shaft, so as to define, at the periphery of the recovery and cooling device (40), an annular space (55) connecting the space between the recovery wall (42) and the container base (53a) with the inner space of the container shaft (53), above the recovery wall (42).

4. Device according to any of claims 1 to 3, characterised in that the cylindrical body (11a) of the central chimney (11) has openings for the passage of steam (17) in its upper part.

5. Device according to any one of claims 1 to 3, characterised in that the chimney (41) further comprises a central element (47) in the form of a cross-piece to which is fixed the upper deflecting wall (50), the height of which in the axial direction is greater than the height of the cylindrical body of the chimney (41).

6. Device according to any one of claims 1 to 5, characterised in that the dihedra (22) of the first set have rectangular inclined surfaces which are folded along a diagonal (23), so that the dihedra (22) have two different angles of opening in the radial direction.
